(19) Europäisches Patentamt

European Patent Office

Office européen des brevets

(11) **EP 1 397 320 B1**

(12) **FASCICULE DE BREVET EUROPEEN**

(45) Date de publication et mention
de la délivrance du brevet:
**11.10.2006 Bulletin 2006/41**

(21) Numéro de dépôt: **02748932.7**

(22) Date de dépôt: **05.06.2002**

(51) Int Cl.:
**C03C 25/32** (2006.01)

(86) Numéro de dépôt international:
**PCT/FR2002/001904**

(87) Numéro de publication internationale:
**WO 2003/000611 (03.01.2003 Gazette 2003/01)**

(54) **FILS DE VERRE ENSIMES, COMPOSITION D'ENSIMAGE ET COMPOSITES COMPRENANT LESDITS FILS**

BESCHLICHTETE GLASFASERN, SCHLICHTMITTEL SOWIE DIESE FASERN ENTHALTENDE VERBUNDELEMENTE

SIZED GLASS FIBRES, SIZING COMPOSITION AND COMPOSITES COMPRISING SAID FIBRES

(84) Etats contractants désignés:
**AT BE CH CY DE DK ES FI FR GB GR IE IT LI LU MC NL PT SE TR**

(30) Priorité: **21.06.2001 FR 0108221**

(43) Date de publication de la demande:
**17.03.2004 Bulletin 2004/12**

(73) Titulaire: **Saint-Gobain Vetrotex France S.A.
73000 Chambéry (FR)**

(72) Inventeurs:
• **GONTHIER, Michel
F-73000 Jacob Bellecombette (FR)**
• **LOMBINO, Dino
F-73290 La Motte Servolex (FR)**

(74) Mandataire: **Muller, René
SAINT-GOBAIN RECHERCHE
39, quai Lucien Lefranc
93300 Aubervilliers (FR)**

(56) Documents cités:
**EP-A- 0 356 655          WO-A-99/44960
FR-A- 2 495 129**

**Description**

L'invention concerne des fils de verre revêtus d'une composition d'ensimage destinés à renforcer des matières organiques du type polymère, les compositions d'ensimage utilisées pour revêtir ces fils et les composites renfermant ces fils.

Les fils de verre utilisés pour le renforcement en général sont produits industriellement à partir de filets de verre fondu s'écoulant des multiples orifices d'une filière. Ces filets sont étirés mécaniquement sous la forme de filaments continus, puis sont rassemblés en fils de base qui sont ensuite collectés, par exemple par bobinage sur un support en rotation. Avant leur rassemblement, les filaments sont revêtus d'une composition d'ensimage par passage sur un dispositif adapté tel que des rouleaux d'enduction.

La composition d'ensimage s'avère essentielle à plusieurs titres. Tout d'abord, elle intervient lors de la fabrication des fils en protégeant les filaments de verre de l'abrasion qui se produit lorsque ces derniers frottent à grande vitesse sur les organes servant à les guider et à les collecter. Ensuite, la composition d'ensimage permet de donner de la cohésion au fil en créant des liaisons entre les filaments qui le constituent ce qui le rend plus intègre et de ce fait facilite sa manipulation. La composition d'ensimage joue également un rôle primordial dans la fabrication de matériaux composites à base de polymères renforcés par les fils de verre en favorisant le mouillage et l'imprégnation de ces fils par le polymère qui présente généralement l'aspect d'une résine fluide.

Les matières à renforcer peuvent intégrer les fils de verre sous différentes formes : fils continus ou coupés, tissus, mats de fils continus ou coupés, .....

Les composites destinés à être utilisés en tant que plaques translucides pour parois et toitures sont généralement renforcés par des fils de verre coupés ayant une longueur d'environ 50 mm, voire davantage. Ces plaques peuvent notamment être obtenues par un procédé qui consiste couper des fils de verre issus d'un ou plusieurs enroulements au-dessus d'un convoyeur transportant le lit de résine polymère destinée à imprégner les fils, cette résine ayant la consistance appropriée (par exemple liquide, semi-liquide ou pâteuse) et étant apte à polymériser.

Ce procédé, simple et modulable à la fois au regard de la résine et de la densité des fils dans le tapis, est particulièrement adapté à la fabrication de plaques translucides, planes ou ondulées, à base de polymère thermodurcissable de la famille des polyesters, des vinylesters, des acryliques, des phénoliques ou des époxy. Les propriétés exigées pour ce type de plaque sont un bel aspect, aussi peu de fils visibles que possible (notamment ce que l'on nomme des "fils blancs"), de bonnes propriétés mécaniques, éventuellement une bonne tenue au vieillissement au regard des intempéries et, dans le cas des plaques translucides, un bon niveau de translucidité.

La qualité des composites obtenus par ce procédé dépend largement des propriétés apportées par les fils de verre et par l'ensimage qui les revêt. Notamment, on recherche des compositions d'ensimage qui permettent au fil de s'ouvrir au moment de la coupe afin qu'il puisse tomber sur le convoyeur de manière régulière.

Les fils revêtus de ces compositions d'ensimage doivent également pouvoir être facilement mouillés ou imprégnés à coeur (c'est-à-dire à la surface des filaments constituant le fil) par la résine. Si l'imprégnation est imparfaite, des bulles d'air risquent d'être emprisonnées dans la résine et les fils présentent un aspect blanc laiteux qui les rend visibles au travers de la plaque, d'où un moins bel aspect final et une altération de la transparence.

Il est également souhaité que les compositions d'ensimage permettent une mise en oeuvre rapide, en particulier que les fils puissent être imprégnés dans le laps de temps relativement court, de l'ordre de 5 à 15 secondes, qui est imposé pour produire ces matériaux composites dans des conditions industrielles.

Enfin, il est nécessaire que les plaques possèdent des propriétés mécaniques de renforcement propres à l'usage auquel on les destine, en particulier une bonne résistance à la rupture en traction.

Mais par ailleurs, si la composition d'ensimage doit permettre au fil de s'ouvrir, elle doit le maintenir suffisamment intègre pour éviter qu'il n'éclate au moment de la coupe. L'éclatement du fil provoque la libération des filaments qui le constituent et ces filaments ont tendance à s'agglomérer et à former de la "bourre". La présence de bourre présente deux inconvénients majeurs : tout d'abord, elle perturbe le bon fonctionnement du dispositif de coupe, et ensuite elle tombe en amas sur le tapis ce qui nuit à la qualité de l'imprégnation et par conséquent à la celle de la plaque.

On voit donc que de telles compositions sont difficiles à mettre au point car les propriétés visées sont souvent peu compatibles les unes avec les autres, et qu'il est de ce fait nécessaire de rechercher le meilleur compromis.

Des fils de verres aptes à être utilisés en tant que renforts dans des matériaux composites à base de polymères ont déjà été proposés, en particulier pour former des éléments profilés ou des plaques translucides. Ces fils sont revêtus d'une composition d'ensimage aqueuse qui comprend généralement au moins un agent collant associé à d'autres agents utiles en matière d'ensimage, tels que des lubrifiants, des agents de couplage, des antistatiques, ...

Dans FR 2 495 129, la composition d'ensimage comprend un polyuréthane, une agent de couplage, un lubrifiant et éventuellement un polyester, mais avec un rapport pondéral polyuréthane/polyester.

Dans US-A-4 752 527, la composition d'ensimage proposée comprend un polyester à base de bisphénol A (dénommé "polyester du type bisphénol A") en tant qu'agent collant, un agent de couplage, un lubrifiant et un agent anti-statique. La teneur en solides dans la composition est de 1 à 30 % en poids.

Dans US-A-5 219 656, on décrit un ensimage comprenant comme agent collant un polyester du type bisphénol A ou un époxy, un agent de couplage, un lubrifiant et un composé allylique, en particulier un triallylcyanurate. La présence de ce dernier composé à la surface des fils de verre permet d'obtenir un matériau composite qui conserve son caractère translucide plus longtemps.

Dans US-A-5 242 958 et US-A-5 604 270, l'agent collant est un époxy utilisé seul ou en combinaison avec un polyester du type bisphénol A, un polyuréthane, un poly(urée uréthane), un polyesteruréthane ou un polyétheruréthane. La composition comprend en outre un agent de couplage et un lubrifiant.

Il a également été proposé d'utiliser en tant qu'agent collant des composés insaturés présentant un degré d'insaturation déterminé dans le but de contrôler la vitesse d'imprégnation des fils de verre.

Ainsi, dans US-A-4 789 593, la composition d'ensimage renferme un polyester époxydé ou un époxy estérifié comprenant moins de 1,5 double liaison aliphatique par mole et présentant un rapport du nombre d'insaturations aliphatiques au nombre d'insaturations aromatiques inférieur à 0,1, ainsi qu'un lubrifiant et un agent de couplage.

Dans US-A-6 139 958, l'agent collant est un polyester du type bisphénol A ou un époxy estérifié par un ou plusieurs acides gras renfermant moins de 1,4 double liaison aliphatique par mole et possédant un rapport du nombre d'insaturations aliphatiques au nombre d'insaturations aromatiques inférieur à 0,1, et il est utilisé en mélange avec un poly(acétate de vinyle). La composition comprend également un agent de couplage, un lubrifiant et un agent anti-statique.

Le rôle du polyester dans les compositions qui viennent d'être présentées est d'améliorer l'aptitude du fil de verre à être mouillé ou imprégné par la résine, ce qui permet d'obtenir une plaque ayant un niveau de translucidité très élevé. Il n'en demeure pas moins que les fils revêtus des ces ensimages ont une aptitude à s'ouvrir au moment de la coupe qui reste médiocre et que leur mise en oeuvre n'est pas entièrement satisfaisante.

L'invention a pour but de mettre au point des fils de verre revêtus d'une composition d'ensimage qui, tout en permettant d'obtenir des plaques composites translucides de bel aspect, renfermant peu de fils visibles et présentant de bonnes propriétés mécaniques, sont plus faciles à mettre en oeuvre du fait notamment de leur ouverture améliorée lors de la coupe. Comme cela a été indiqué précédemment, il est en effet essentiel que les fils coupés puissent se répartir régulièrement sur le convoyeur et former un tapis homogène, exempt d'agglomérats de fils, et apte à être imprégné rapidement par la résine.

Ces buts sont atteints par la présente invention qui a pour objet des fils de verre revêtus d'une composition d'ensimage, essentiellement aqueuse, cette composition étant caractérisée en ce qu'elle associe au moins un polyuréthane (ci-après désigné « A ») et au moins un polyester (ci-après désigné « B »), dans un rapport pondéral $0.05 \leq A/B \leq 3$.

Dans la présente invention, par "fils de verre revêtus d'une composition d'ensimage" on entend des fils de verre "qui ont été revêtus d'une composition d'ensimage qui comprend ...", c'est-à-dire non seulement les fils de verre revêtus de la composition en question tels qu'obtenus à la sortie immédiate de l'(des) organe(s) d'ensimage, mais aussi ces mêmes fils après qu'ils ont subi un ou plusieurs autres traitements, par exemple une (des) étape(s) de séchage, en vue d'éliminer l'eau et le ou les éventuels solvants présents dans la composition, et/ou de polymériser/réticuler certains constituants de ladite composition.

Toujours dans le contexte de l'invention, par "fils" il faut entendre les fils de base issus du rassemblement sous la filière d'une multitude de filaments, et les produits dérivés de ces fils, notamment les assemblages de ces fils de base en stratifils. De tels assemblages peuvent être obtenus en dévidant simultanément plusieurs enroulements de fils de base, puis en les rassemblant en mèches qui sont bobinées sur un support en rotation. Ce peut être également des stratifils "directs" de titre (ou masse linéique) équivalent à celui des stratifils assemblés, obtenus par le rassemblement de filaments, directement sous la filière, et l'enroulement sur un support en rotation.

Encore selon l'invention, par "composition d'ensimage essentiellement aqueuse", on entend une composition qui contient au moins 90 % en poids d'eau, de préférence au moins 93 %, et mieux encore 94 à 96 %, au moins un agent lubrifiant et au moins un agent de couplage.

Selon un mode de réalisation préféré de l'invention, les fils de verres sont revêtus d'une composition d'ensimage dont le polyuréthane présente une masse moléculaire inférieure à 20000 et de préférence comprise entre 4000 et 14000.

De préférence, le polyuréthane est choisi parmi les polyuréthanes obtenus par réaction d'au moins un polyisocyanate et d'au moins un polyol à chaîne aliphatique et/ou cycloatiphatique.

Selon un autre mode de réalisation de l'invention, les fils de verre sont revêtus d'une composition d'ensimage dont le polyester est choisi parmi les polyesters obtenus par réaction d'un poly(alkylèneglycol) et d'un acide carboxylique et/ou d'un anhydride carboxylique. De préférence le polyester résulte de la réaction de poly(alkylèneglycol) avec l'anhydride phtalique et l'anhydride maléique.

L'association du polyuréthane A et du polyester B s'avère avantageuse pour former des fils de verre présentant une ouverture à la coupe améliorée. Il a été constaté que le polyuréthane, tout en étant apte à lier les fils entre eux, possède un caractère suffisamment flexible pour ne pas coller les filaments de manière trop importante. De ce fait, l'ouverture du fil lors de la coupe s'en trouve améliorée. On a découvert qu'une faible teneur en polyuréthane dans la composition d'ensimage suffit à obtenir l'effet recherché.

De manière générale, on obtient des résultats tout à fait satisfaisants lorsqu'on associe le(s) polyuréthane(s) A avec le(s) polyéster(s) B dans un rapport pondéral 0,05 ≤ A/B ≤ 3, de préférence compris entre 0,05 et 2, et mieux encore compris entre 0,25 et 1,5. Un rapport A/B inférieur ou égal à 1 s'avère particulièrement avantageux car il permet à la fois une mise en oeuvre facile lors de la fabrication des plaques et une amélioration des propriétés des plaques obtenues, notamment au niveau de la résistance à la rupture en traction.

Les fils de verre revêtus d'une composition d'ensimage associant un polyuréthane résultant de la réaction d'au moins un polyisocyanate et d'au moins un polyol à chaîne aliphatique et/ou cycloaliphatique et un polyester obtenu par réaction de poly(alkylèneglycol) et d'anhydrides phtalique et maléique se sont avérés particulièrement intéressants pour la fabrication visée de plaques composites translucides.

Conformément à la définition donnée précédemment, la composition d'ensimage revêtant les fils de verre comprend au moins un agent lubrifiant dont le rôle consiste notamment à protéger les fils de l'abrasion mécanique lors de leur fabrication et à rigidifier le fil. L'association de plusieurs lubrifiants permet notamment d'adapter la vitesse d'imprégnation des fils par la résine. L'agent lubrifiant est généralement choisi parmi les composés cationiques hydrosolubles tels que les polyalkylèneimides, et les composés non ioniques du type esters d'acides gras et de poly(alkylèneglycols) ou poly(oxyalkylène) tel que le monolaurate de polyéthylèneglycol ou du type amides gras et de poly(oxyalkylène) tel que les amides de suif hydrogéné et de polyoxyéthylène. De préférence, on utilise un polyéthylèneimide.

Conformément à la définition donnée précédemment, la composition d'ensimage revêtant les fils de verre comprend au moins un agent de couplage choisi parmi les composés renfermant un ou plusieurs groupes organiques fonctionnels, par exemple un groupe acryloxy, méthacryloxy, glycydoxy ou amino. De préférence, l'agent de couplage est un silane, et mieux encore un alkoxysilane comprenant au moins un groupe précité. On préfère les méthacryloxysilanes tels que le gamma-méthacryloxypropyltriméthoxysilane et les aminosilanes tels que le chlorhydrate de N-benzylaminoéthylpropylammoniumtriméthoxysilane.

De manière avantageuse, la composition comprend au moins deux agents de couplage dont l'un au moins est un silane renfermant au moins une fonction acrylique ou méthacrylique, et l'autre est un silane renfermant au moins une fonction amine.

Les fils de verre revêtus de la composition d'ensimage conformes à l'invention présentent une perte au feu inférieure à 1,5 %, de préférence comprise entre 0,45 et 0,8 %, et mieux encore entre 0,45 et 0,65.

Le plus souvent, les fils de verre conformes à l'invention se présentent sous la forme d'enroulements de fils de base que l'on soumet à un traitement thermique. Ce traitement est destiné essentiellement à éliminer l'eau et les solvants apportés par la composition d'ensimage et, le cas échéant, à obtenir la réticulation des groupes réactifs des agents collants. Les conditions du traitement des enroulements peuvent varier selon la masse de l'enroulement. En général, le séchage est réalisé à une température de l'ordre de 110 à 140°C pendant plusieurs heures, de préférence 12 à 18 heures.

Comme cela a déjà été dit, les fils de base ainsi obtenus sont généralement extraits de l'enroulement et réunis avec plusieurs autres fils de base en une mèche qui est ensuite enroulée sur un support rotatif pour former un stratifil. Il a été constaté que l'application d'une composition renfermant un agent antistatique cationique du type sel d'ammonium quaternaire sur les fils permet d'évacuer les charges électriques générées lors de la coupe. Ainsi, en déposant la composition précitée sur les fils de base, après extraction de l'enroulement et rassemblement pour former la mèche, on améliore notablement la répartition des fils coupés et l'aspect de la plaque finale. De préférence, on revêt les fils d'une composition aqueuse contenant 20 à 35 %, et de préférence de l'ordre de 25 % en poids de chlorure de cocotriméthylammonium. Le taux de dépose sur les fils est généralement de 0,01 à 0,05 % et de préférence de l'ordre de 0,03 %.

Les fils revêtus de la composition d'ensimage selon l'invention, le cas échéant de la composition décrite au paragraphe précédent, peuvent être constitués de verre de toute nature pour autant qu'il soit apte au fibrage, par exemple en verre E, C, AR, et préférentiellement en verre E.

Ces mêmes fils sont constitués de filaments dont le diamètre peut varier dans une large mesure, par exemple de 9 à 16 $\mu$m, et de préférence 11 à 13 $\mu$m.

De manière avantageuse, les fils ont un titre compris entre 15 et 60 tex, et mieux encore de l'ordre de 30 tex. De ce fait, même lorsqu'on utilise des filaments de diamètre relativement élevé, le fil reste apte à être coupé en formant un tapis régulier et à être imprégné rapidement par la résine ce qui permet d'avoir un excellent renforcement tout en conservant le caractère translucide de la plaque composite.

Un autre objet de l'invention concerne la composition d'ensimage apte à revêtir lesdits fils de verre, laquelle composition est caractérisée en ce qu'elle comprend :

- au moins un polyuréthane A
- au moins un polyester B
- au moins un agent lubrifiant
- au moins un agent de couplage
- et de l'eau,

le rapport pondéral A/B étant tel que 0.05 ≤ A/B ≤3.

De préférence, la composition d'ensimage comprend :

- 0,5 à 5 % en poids de polyuréthane A
- 1,5 à 5,85 % en poids de polyester B
- 0,02 à 0,04 % en poids d'agent lubrifiant
- 0,10 à 0,33 % en poids d'agent de couplage
- et au moins 90 % d'eau.

Un premier groupe de compositions d'ensimage particulièrement préféré comprend :

- 2 à 5 % en poids de polyuréthane A
- 3,65 à 5,85 % en poids de polyester B
- 0,02 à 0,04 % en poids d'agent lubrifiant
- 0,10 à 0,33 % en poids d'agent de couplage
- et au moins 90 % d'eau.

Un deuxième groupe de compositions d'ensimage également particulièrement préféré comprend :

- 0,65 à 1,65 % en poids de polyuréthane A
- 1,60 à 2,60 % en poids de polyester B
- 0,02 à 0,04 % en poids d'agent lubrifiant
- 0,10 à 0,33 % en poids d'agent de couplage
- et au moins 90 % d'eau.

De préférence, la composition d'ensimage comprend au moins 93 % en poids d'eau et mieux encore au moins 94 %.

De manière particulièrement préférée, la composition présente un rapport pondéral A/B compris entre 0,05 et 2, et mieux encore compris entre 0,25 et 1,5.

Il est possible d'introduire d'autres constituants en tant qu'additifs dans la composition d'ensimage. A titre d'exemples d'additifs, on peut citer :

- les agents anti-statiques organiques, tels que les sels d'ammonium quaternaires alkoxylés cationiques, ou inorganiques, tels que le chlorure de chrome ou d'un métal alcalin ou alcalino-terreux, notamment de lithium ou de magnésium,
- les agents de réticulation tels que les monomères, dimères, trimères ou oligomères de mélamine-formol et les composés N-méthylolés,
- les agents anti-oxydants tels que les phénols encombrés stériquement, les diarylamines, les thioéthers, les quinones et les phosphates.

Dans ce cas, la teneur totale en ces additifs n'excède généralement pas 0,5 % en poids de la composition, de préférence 0,2 %.

L'extrait sec de la composition d'ensimage est généralement compris entre 2 et 10 % , de préférence 2 et 5 %, et avantageusement de l'ordre de 3 %.

Un objet de l'invention concerne encore les plaques composites comprenant les fils de verre revêtus de la composition d'ensimage. De telles plaques comprennent au moins une matière polymère thermodurcissable, de préférence un polyester, un vinylester, un acrylique, une résine phénolique ou époxy, et des fils de verre dont tout ou partie est constituée de fils de verre conformes à l'invention. Le taux de verre au sein du composite est généralement compris entre 20 et 40 % en poids, et de préférence entre 25 et 35 %. L'épaisseur de la plaque peut varier dans une large mesure, par exemple de 0,5 à 3 mm, et de préférence de 1 à 2 mm. En plus de la faible teneur en fils visibles et de leur caractère translucide, les plaques selon l'invention sont intéressantes en ce qu'elles présentent une meilleure résistance à la rupture en traction comme indiqué dans les exemples de réalisation qui suivent et qui permettent d'illustrer l'invention, sans toutefois la limiter.

Dans ces exemples, les propriétés relatives au fil revêtu de la composition d'ensimage et à la plaque composite incorporant ledit fil sont mesurées comme suit :

- la perte au feu, en %, est mesurée dans les conditions de la norme ISO 1887.
- la bourre et la tension du fil sont mesurées en faisant défiler le fil sur un dispositif constitué de 8 embarrages, à la vitesse de 50 m/min. Le dispositif est placé dans un local conditionné à 20°C et 50 % d'humidité relative.

On définit la bourre par la quantité de fibrilles, en mg, obtenue après défilement d'1 kg de fil. La tension du fil, exprimée en g, est représentative du comportement du fil lors de la mise en oeuvre ultérieure, notamment son aptitude au dévidage. Un fil présentant une tension supérieure à environ 2000 g n'est généralement pas satisfaisant car il se prête difficilement à la coupe et a tendance à s'érailler ce qui nuit à la qualité du tapis. En effet, un tel fil produit une bourre abondante qui s'accumule au niveau du coupeur et tombe en amas sur le tapis.

- la résistance à la traction du fil est mesurée dans les conditions de la norme ISO 3341. Elle est exprimée en g/30 tex.
- la pégosité (ou aptitude au collage) est déterminée au moyen d'un dispositif comprenant un système d'entraînement du fil à une vitesse constante (6 m/min), une poulie métallique en acier chromé dur, reliée à un contrepoids de 70 g, sur laquelle glisse le fil. La tension du fil sur la poulie est mesurée en continu sur 60 m de fil. La valeur moyenne de la tension, exprimée en g, correspond à la pégosité.
- la densité de charges électrostatiques est obtenue en coupant le fil librement dévidé (aucun embarrage) au moyen d'un coupeur muni de deux lames (longueur de coupe : 50 mm ; pression sur le rouleau enclume : 5 kg) placé dans une enceinte à 20°C et sous une humidité relative de 20 %. Le fil coupé est récupéré dans un réceptacle métallique équipé d'une cage de Faraday. La densité de charges accumulées au cours de la coupe est exprimée en nano-Coulomb par gramme de fil (nC/g).
- l'ouverture à la coupe permet d'évaluer la qualité de la dispersion du fil coupé. On la détermine en coupant le fil à l'aide d'un coupeur (Schmit et Heinzman ; vitesse de coupe : 110 tours/min. ; longueur du fil coupé : 50 mm) au-dessus d'une bande transporteuse défilant à une vitesse de 15 m/min., la coupe étant effectuée dans des conditions hygrométriques contrôlées (20°C ; 50 % d'humidité relative). On obtient un feutre (masse : environ 15 g) dont on compte le nombre de brins agglomérés présentant la forme de bûches (2400 tex), de bûchettes (300 à 2400 tex) et de recollements (60 à 300 tex). L'ouverture à la coupe est donnée par la relation suivante :

$$\text{ouverture à la coupe} = 5 \times (\text{nombre de bûches}) + 2 \times (\text{nombre de bûchettes}) + 1 \times (\text{nombre de recollements})$$

dans laquelle 5, 2 et 1 sont les coefficients de pondération reflétant l'importance des brins dans l'application visée.

- la vitesse d'imprégnation à 50 et 100 % est mesurée de la manière suivante :

On imprègne une préforme de fils coupés (200 mm x 200 mm ; environ 50 g) préalablement déposée sur une feuille de Mylar® par la résine constituée de :

- résine polyester non thixotrope (Norsodine S 2010 V commercialisée par Cray Valley)    120 g
- accélérateur (NL 51 P commercialisé par Akzo Nobel)    0,12 g
- catalyseur (Butanox M 50 commercialisé par Akzo Nobel)    1,2 g

Après avoir déposé la résine sur la préforme, on dispose par dessus une grille de quadrillage définissant des carrés de 200 mm de côté et de 28 mm d'entraxe et on compte le nombre de carrés imprégnés par la résine en fonction du temps. La vitesse d'imprégnation est définie par le temps nécessaire pour obtenir une imprégnation de la préforme à 50 % et à 100 %.

- la translucidité de la plaque composite incorporant les fils revêtus de la composition d'ensimage ainsi que la présence de fils blancs au sein de cette plaque sont évaluées visuellement sur une plaque réalisée de la manière suivante :

On imprègne une préforme de fils coupés (200 mm x 200 mm ; environ 33 g) préalablement déposée sur une feuille de Mylar® par la résine polyester de composition suivante :

- résine 3080 LA (commercialisée par Cray Valley)    90 g
- styrène    9 g
- catalyseur LUPEROX K2 (commercialisé par Elf Atochem)    1 g
- accélérateur NL 51 P (commercialisé par AKZO Nobel)    0,5 g

La préforme imprégnée est recouverte d'une feuille de Mylar® puis elle est soumise à un débullage par passage d'un rouleau adapté avant d'être polymérisée dans une étuve (gradient de température : 85 °C à 130°C en 7 minutes).

- Pour le test de translucidité, la préforme est obtenue à partir de fils issus d'un stratifil. La translucidité est notée selon une échelle allant de 1 (peu translucide) à 5 (translucidité du verre à vitre).
- Pour le test de fils blancs, la préforme est obtenue à partir de fils provenant de la partie externe d'un enroulement de fil de base ayant subi le traitement thermique. La présence de fils blancs est notée selon une échelle allant de 1 (très nombreux fils visibles) à 5 (aucun fil visible).

- La résistance à la traction de la plaque, en MPa, est mesurée dans les conditions de la norme ISO 527-4, la plaque étant fabriquée conformément à la norme ISO 1268.

## EXEMPLE 1

On prépare une composition d'ensimage comprenant (en % en poids) :

- polyuréthane aliphatique/cycloaliphatique non ionique[1] (masse moléculaire : 14 000 ; solution aqueuse à 33 % de matière active)     2,00
- polyester insaturé non ionique[2] (solution aqueuse à 45 % de matière active)     5,85
- lubrifiant : polyéthylèneimide[3]     0,025
- silane[4]     0,23
- silane aminé [5]     0,10
- acide acétique à 90 %     0,015
- eau qsp     100

Le rapport pondéral A/B est égal à 0,25

La préparation de la composition d'ensimage est réalisée de la manière suivante :

On procède à l'hydrolyse des groupes méthoxy des silanes [4] et [5] par ajout d'acide dans une solution aqueuse de ces silanes maintenue sous agitation. On introduit ensuite les autres constituants de la composition d'ensimage, toujours sous agitation, et on ajuste le pH à une valeur de 5,0 ± 0,3 si nécessaire.

L'extrait sec de la composition ainsi préparée est égal à 3 % en poids.

La composition d'ensimage est utilisée pour revêtir, de manière connue, des filaments de verre E d'environ 12 µm de diamètre étirés à partir de filets de verre fondu s'écoulant des 2400 orifices d'une filière, les filaments étant ensuite rassemblés sous forme d'enroulement de fils de base de titre égal à 30 tex.

L'enroulement est ensuite séché à 130°C pendant 12 heures.

Sur les fils de base extraits de l'enroulement et rassemblés en stratifils constitués de 80 fils de base, on applique une solution aqueuse antistatique à 25 % en poids de chlorure de cocotriméthylammonium[6] (taux déposé en sec : 0,03 %).

Les propriétés du fil déroulé à partir du stratifil et de la plaque incorporant ce fil sont données dans le tableau 1.

## EXEMPLE 2

On procède dans les conditions de l'exemple 1 modifié en ce que la teneur en poluréthane et en polyester est la suivante (en % en poids) :

- polyuréthane aliphatique/cycloaliphatique non ionique [1]     3,45
- polyester insaturé non ionique [2]     4,80

Le rapport pondéral A/B est égal à     0,538

L'extrait sec de la composition est égal à 3 % en poids. Les propriétés du fil ainsi obtenu et de la plaque incorporant ce fil sont données dans le tableau 1.

## EXEMPLE 3

On procède dans les conditions de l'exemple 1 modifié en ce que la teneur en poluréthane et en polyester est la suivante (en % en poids) :

- polyuréthane aliphatique/cycloaliphatique non ionique [1]     5,00
- polyester insaturé non ionique [2]     3,65

Le rapport pondéral A/B est égal à 1.

L'extrait sec de la composition est égal à 3 % en poids. Les propriétés du fil ainsi obtenu et de la plaque incorporant ce fil sont données dans le tableau 1.

### EXEMPLE 4 (COMPARATIF)

On procède dans les conditions de l'exemple 1 modifié en ce que la teneur en poluréthane et en polyester est la suivante (en % en poids) :

*   polyuréthane aliphatique/cycloaliphatique non ionique [1]          8,00
*   polyester insaturé non ionique [2]          1,45

Le rapport pondéral A/B est égal à 4.
L'extrait sec de la composition est égal à 3,2 % en poids. Les propriétés du fil ainsi obtenu et de la plaque incorporant ce fil sont données dans le tableau 1.

### EXEMPLE 5

On procède dans les conditions de l'exemple 1 modifié en ce que les constituants suivants sont présents dans la composition à raison de (en % en poids) :

*   polyuréthane aliphatique/cycloaliphatique non ionique [1]          3,45
*   polyester insaturé non ionique [2]          4,80
*   silane aminé [5]          0,20

Le rapport pondéral A/B est égal à          0,538.
L'extrait sec de la composition est égal à 3 % en poids. Les propriétés du fil ainsi obtenu et de la plaque incorporant ce fil sont données dans le tableau 1.

### EXEMPLE 6

On procède dans les conditions de l'exemple 1 modifié en ce que les constituants suivants sont présents dans la composition à raison de (en % en poids) :

*   polyuréthane aliphatique/cycloaliphatique non ionique [1]          5,00
*   polyester insaturé non ionique [2]          3,65
*   silane aminé [5]          0,20
*   lubrifiant : polyéthylène imide [3]          0,040

Le rapport pondéral A/B est égal à 1.
L'extrait sec de la composition est égal à 3 % en poids. Les propriétés du fil ainsi obtenu et de la plaque incorporant ce fil sont données dans le tableau 1.

### EXEMPLE 7 (COMPARATIF)

On procède dans les conditions de l'exemple 1 modifié en ce que la composition est exempte de polyuréthane aliphatique/cycloaliphatique non ionique [1] et contient 7,3 % en poids de polyester insaturé non ionique [2].
L'extrait sec de la composition est égal à 3,8 % en poids. Les propriétés du fil ainsi obtenu et de la plaque incorporant ce fil sont données dans le tableau 1.

### EXEMPLE 8 (COMPARATIF)

On procède dans les conditions de l'exemple 1 modifié en ce que la composition est exempte de polyester insaturé non ionique [2] et contient 10 % en poids de polyuréthane aliphatique/cycloaliphatique non ionique [1].
L'extrait sec de la composition est égal à 3,8 % en poids. Les propriétés du fil ainsi obtenu et de la plaque incorporant ce fil sont données dans le tableau 1.

**Tableau 1**

| EXEMPLE | 1 | 2 | 3 | 4 (comp.) | 5 | 6 | 7 (comp.) | 8 (comp.) | C1 (comp.) | C2 (comp.) | C3 (comp.) |
|---|---|---|---|---|---|---|---|---|---|---|---|
| **Fils ensimés** | | | | | | | | | | | |
| Ensimage (%) | 0,45 | 0,63 | 0,47 | 0,77 | 0,54 | 0,62 | 0,64 | 0,65 | 0,62 | 0,54 | 0,77 |
| Bourre(mg/kg) | 5 | 2 | 3 | 0,5 | 3 | 1 | 30 | 3 | 3 | 6 | 3 |
| Tension (g) | 1745 | 1375 | 1016 | 1900 | 1400 | 690 | n.d. | n.d. | 800 | 1120 | 3000 |
| Solubilité dans acétone (%) | 80 | 80 | 76 | 83 | 81 | 79 | 83 | 82 | 81 | 74 | 83 |
| Résistance à la traction (g/30 tex) | 1,75 | 1,73 | 1,74 | 1,78 | 1,95 | 2,22 | n.d. | 1,86 | 1,69 | 1,14 | 1,60 |
| Pégosité (g) | 73 | 90 | 64 | 105 | 66 | 65 | > 130 | 83 | 40 | 30 | 58 |
| Densité stratifil | 1,34 | 1,32 | 1,29 | 1,33 | 1,31 | 1,32 | 1,47 | 1,27 | 1.29 | 1,28 | 1,23 |
| Ouverture à la coupe (nbre de brins agglomérés) | 10 | 10 | 4 | 175 | 15 | 15 | 230 | 90 | 170 | 5 | 80 |
| Densité de charges électrostatiques (nC/g) | 4 5 | | 1 | 4 | 0,2 | 0,5 | n.d. | 4 | 25 | 2 | 27 |
| Imprégnation (min) | | | | | | | | | | | |
| à 50 % | 3 | 3 | 3 | n.d. | 3 | 3 | n.d. | 2 | 2 | 3 | 3 |
| à 100 % | 6 | 7 | 7 | n.d. | 7 | 7 | n.d. | 4 | 10 | 7 | 5 |
| **Plaque composite** | | | | | | | | | | | |
| Translucidité | 4,5 | 4,5 | 4 | 3 | 4,5 | 3,5 | n.d. | n.d. | 4,5 | 3,5 | 4,5 |
| Fils blancs | 4 | 4,5 | 4 | 3 | 4 | 3 | 3 | 2,5 | 3,5 | 2 | n.d. |
| Résistance en traction de la plaque (MPa) | n.d. | 114 | 115 | n.d. | 108 | 105 | n.d. | n.d. | n.d. | 85 | 94 |
| n.d. : non déterminé comp. : comparatif | | | | | | | | | | | |

A la lecture du tableau 1, on constate que les fils de verre des exemples 1 à 3, 5 et 6 conformes à l'invention présentent une bonne ouverture à la coupe et permettent d'obtenir une plaque composite ayant à la fois une bonne translucidité et peu de fils blancs. Ce niveau de performance est supérieur à celui de fils revêtus d'un ensimage contenant un polyester (exemple 7), notamment en terme d'ouverture à la coupe, ou contenant un polyuréthane seul (exemple 8) qui conduit à un nombre élevé de fils blancs.

Les fils selon l'invention s'avèrent aussi d'une mise en oeuvre plus aisée que les fils actuellement proposés pour l'application visée, notamment les fils revêtus d'un ensimage à base d'un mélange de polyester et d'époxy (exemple C1) ou de polyester seul (exemple C3).

Les fils selon l'invention conduisent aussi à un meilleur aspect de la plaque, notamment en ce qui concerne le nombre de fils blancs, par rapport aux fils qui conviennent plus particulièrement pour la fabrication des plaques visées, tels que les fils de l'exemple C2 revêtus d'un ensimage à base de poly(acétate de vinyle). Comparés à ces mêmes fils, les fils conformes à l'invention permettent en outre d'obtenir une meilleure résistance à la rupture en traction.

Les fils de verre revêtus de la composition d'ensimage qui associe un polyuréthane et un polyester dans un rapport pondéral égal ou inférieur à 1,5, de préférence inférieur ou égal à 1, sont remarquables en ce qu'ils possèdent à la fois une excellente ouverture à la coupe (inférieure à 30) et des propriétés de renforcement élevées (notamment une résistance en traction au moins égale à 100 MPa) tout en conservant une translucidité et un nombre de fils visibles tout à fait satisfaisants pour l'application visée.

(1) commercialisé sous la référence «Neoxil® 8200A» par la société DSM
(2) commercialisé sous la référence «Filco® 350» par la société COIM
(3) commercialisé sous la référence «Emery® 6760» par la société HENKEL CORPORATION
(4) commercialisé sous la référence «Silquest® A-174» par la société WITCO CORPORATION
(5) commercialisé sous la référence «Silquest® A-1128» par la société WITCO CORPORATION
(6) commercialisé sous la référence « Arquad® C35 » par la société AKZO NOBEL CHEMICHALS

## Revendications

1.  Fil de verre revêtu d'une composition d'ensimage, qui comprend l'association d'au moins un polyuréthane A et d'au moins un polyester, **caractérisée en ce que** le rapport pondéral A/B est tel que $0.05 \leq A/B \leq 3$.

2.  Fil de verre selon la revendication 1, **caractérisé en ce que** le rapport pondéral A/B est compris entre 0,05 et 2, notamment entre 0,25 et 1,5.

3.  Fil de verre selon la revendication 1 ou 2, **caractérisé en ce que** le polyuréthane A a une masse moléculaire inférieure à 20000, de préférence comprise entre 4000 et 14000.

4.  Fil de verre selon l'une des revendications 1 à 3, **caractérisé en ce que** le polyuréthane est choisi parmi les polyuréthanes obtenus par réaction d'au moins un polyisocyanate et d'au moins un polyol à chaîne aliphatique et/ou cycloaliphatique.

5.  Fil de verre selon l'une des revendications 1 à 4, **caractérisé en ce que** le polyester B est choisi parmi les polyesters obtenus par réaction d'un poly(alkylèneglycol) et d'un acide carboxylique et/ou d'un anhydride carboxylique.

6.  Fil de verre selon la revendication 5, **caractérisé en ce que** le polyester résulte de la réaction de poly(alkylèneglycol) avec l'anhydride phtalique et l'anhydride maléique.

7.  Fil de verre selon l'une des revendications 1 à 6, **caractérisé en ce que** la composition comprend en outre au moins un agent de couplage et/ou au moins un agent lubrifiant.

8.  Fil de verre selon la revendication 7, **caractérisé en ce que** l'agent de couplage est un composé renfermant un ou plusieurs groupes organiques fonctionnels acryloxy, méthacryloxy, glycydoxy ou amino.

9.  Fil de verre selon la revendication 8, **caractérisé en ce que** l'agent de couplage est un silane, notamment un alkoxysilane.

10. Fil de verre selon l'une des revendications 1 à 9, **caractérisé en ce qu'**il présente une perte au feu inférieure à 1,5 %.

**11.** Fil de verre selon l'une des revendications 1 à 10, **caractérisé en ce qu'**il est constitué de filaments ayant un diamètre variant de 9 à 16 μm.

**12.** Fil de verre selon l'une des revendications 1 à 11, **caractérisé en ce qu'**il présente un titre compris entre 15 et 60 tex.

**13.** Composition d'ensimage destinée à revêtir les fils de verre selon l'une des revendications 1 à 12, qui comprend:

- au moins un polyuréthane A
- au moins un polyester B
- au moins un agent lubrifiant
- au moins un agent de couplage
- et de l'eau,

**caractérisée en ce que** le rapport pondéral A/B est tel que $0.05 \leq A/B \leq 3$.

**14.** Composition selon la revendication 13, **caractérisée en ce qu'**elle comprend :

- 0,5 à 5 % en poids de polyuréthane A
- 1,5 à 5,85 % en poids de polyester B
- 0,02 à 0,04 % en poids d'agent lubrifiant
- 0,10 à 0,33 % en poids d'agent de couplage
- et au moins 90 % d'eau.

**15.** Composition selon la revendication 14, **caractérisée en ce qu'**elle comprend :

- 2 à 5 % en poids de polyuréthane A
- 3,65 à 5,85 % en poids de polyester B.

**16.** Composition selon la revendication 14, **caractérisée ce qu'**elle comprend :

- 0,65 à 1,65 en poids de polyuréthane A
- 1,60 à 2,6 % en poids de polyester B.

**17.** Composition selon l'une des revendications 13 à 16, **caractérisée en ce qu'**elle présente un extrait sec compris entre 2 et 10 % en poids.

**18.** Composition selon l'une des revendications 13 à 17, **caractérisée en ce qu'**elle comprend en outre au moins un agent anti-antistatique et/ou un agent de réticulation et/ou un agent oxydant.

**19.** Plaque composite comprenant au moins une matière polymère thermodurcissable et des fils de verre de renforcement, **caractérisée en ce que** tout ou partie des fils est constitué par des fils selon l'une des revendications 1 à 12.

**20.** Plaque composite selon la revendication 19, **caractérisée en ce que** la matière polymère est choisie parmi les polyesters, les vinylesters, les acryliques, les résines phénoliques et les époxy.

**21.** Plaque composite selon la revendication 19 ou 20, **caractérisée en ce qu'**elle présente une résistance à la rupture en traction supérieure à 100 MPa.

**Claims**

**1.** Glass strand coated with a sizing composition comprising the combination of at least one polyurethane A and at least one polyester B, **characterized in that** the A/B weight ratio is such that $0.05 \leq A/B \leq 3$.

**2.** Glass strand according to Claim 1, **characterized in that** the A/B weight ratio is between 0.05 and 2, especially between 0.25 and 1.5.

**3.** Glass strand according to Claim 1 or 2, **characterized in that** polyurethane A has a molecular mass of less than 20 000, preferably between 4 000 and 14 000.

4.  Glass strand according to one of Claims 1 to 3, **characterized in that** the polyurethane is chosen from polyurethanes obtained by the reaction of at least one polyisocyanate with at least one polyol having an aliphatic and/or cycloaliphatic chain.

5.  Glass strand according to one of Claims 1 to 4, **characterized in that** polyester B is chosen from polyesters obtained from the reaction of a poly(alkylene glycol) with a carboxylic acid and/or with a carboxylic anhydride.

6.  Glass strand according to Claim 5, **characterized in that** the polyester results from the reaction of a poly(alkylene glycol) with phthalic anhydride and maleic anhydride.

7.  Glass strand according to one of Claim 1 to 6, **characterized in that** the composition furthermore includes at least on coupling agent and at least one lubricating agent.

8.  Glass strand according to Claim 7, **characterized in that** the coupling agent is a compound containing one or more acryloxy, methacryloxy, glycydoxy or amino functional organic groups.

9.  Glass strand according to Claim 8, **characterized in that** the coupling agent is a silane, especially an alkoxysilane.

10. Glass strand according to one of Claim 1 to 9, **characterized in that** it has a loss on ignition of less than 1.5%.

11. Glass strand according to one of Claims 1 to 10, **characterized in that** it consists of filaments having a diameter varying from 9 to 16 $\mu$m.

12. Glass strand according to one of Claims 1 to 11, **characterized in that** it has a linear density of between 15 and 60 tex.

13. Sizing composition capable of coating the glass strands according to one of Claims 1 to 12, comprising:

    - at least one polyurethane A
    - at least one polyester B
    - at least one lubricating agent
    - at least one coupling agent and
    - water,

    **characterized in that** the A/B weight ratio is such that $0.05 \leq$ A/B $< 3$.

14. Composition according to Claim 13, **characterized in that** it comprises:

    - 0.5 to 5% by weight of polyurethane A
    - 1.5 to 5.85% by weight of polyester B
    - 0.02 to 0.04% by weight of lubricating agent
    - 0.10 to 0.33% by weight of coupling agent and
    - at least 90% water.

15. Composition according to Claim 14, **characterized in that** it comprises :

    - 2 to 5% by weight of polyurethane A
    - 3.65 to 5.85% by weight of polyester B

16. Composition according to Claim 14, **characterized in that** it comprises :

    - 0.65 to 1.65% by weight of polyurethane A
    - 1.60 to 2.60% by weight of polyester B

17. Composition according to one of Claims 13 to 16, **characterized in that** it has a solids content of between 2 and 10% by weight.

18. Composition according to one of Claims 13 to 17, **characterized in that** it furthermore includes at least one antistatic agent and/or one crosslinking agent and/or one oxidizing agent.

19. Composite panel comprising at least one thermosetting polymer material and glass reinforcing strands, **characterized in that** all or some of the strands consist of strands according to one of Claims 1 to 12.

20. Composite panel according to Claim 19, **characterized in that** the polymer material is chosen from polyesters, vinyl esters, acrylics, phenolic resins and epoxy resins.

21. Composite panel according to Claim 19 or 20, **characterized in that** it has a tensile strength of greater than 100 MPa.

**Patentansprüche**

1. Glasfaden, der mit einer Schlichtezusammensetzung überzogen ist, welche die Kombination aus mindestens einem Polyurethan A und mindestens einem Polyester B umfasst, **dadurch gekennzeichnet, dass** das Gewichtsverhältnis von A/B $0{,}05 \leq \dfrac{A}{B} \leq 3$ beträgt.

2. Glasfaden nach Anspruch 1, **dadurch gekennzeichnet, dass** das Gewichtsverhältnis von A/B 0,05 bis 2 und insbesondere zwischen 0,25 und 1,5 beträgt.

3. Glasfaden nach Anspruch 1 oder 2, **dadurch gekennzeichnet, dass** das Molekulargewicht des Polyurethans A weniger als 20 000 und vorzugsweise 4 000 bis 14 000 beträgt.

4. Glasfaden nach einem der Ansprüche 1 bis 3, **dadurch gekennzeichnet, dass** das Polyurethan aus Polyurethanen ausgewählt ist, die durch Umsetzung mindestens eines Polyisocyanats mit mindestens einem Polyol mit aliphatischer und/oder cycloaliphatischer Kette erhalten worden sind.

5. Glasfaden nach einem der Ansprüche 1 bis 4, **dadurch gekennzeichnet, dass** der Polyester B aus Polyestern ausgewählt ist, die durch Umsetzung eines Polyalkylenglykols mit einer Carbonsäure und/oder einem Carbonsäureanhydrid erhalten worden sind.

6. Glasfaden nach Anspruch 5, **dadurch gekennzeichnet, dass** der Polyester aus der Umsetzung von Polyalkylenglykol mit Phthalsäureanhydrid und Maleinsäureanhydrid resultiert.

7. Glasfaden nach einem der Ansprüche 1 bis 6, **dadurch gekennzeichnet, dass** die Zusammensetzung außerdem mindestens ein Haftmittel und/oder mindestens ein Gleitmittel umfasst.

8. Glasfaden nach Anspruch 7, **dadurch gekennzeichnet, dass** das Haftmittel eine Verbindung ist, die eine oder mehrere funktionelle organische Acryloxy-, Methacryloxy-, Glycydoxy- oder Aminogruppen enthält.

9. Glasfaden nach Anspruch 8, **dadurch gekennzeichnet, dass** das Haftmittel ein Silan, insbesondere ein Alkoxysilan, ist.

10. Glasfaden nach einem der Ansprüche 1 bis 9, **dadurch gekennzeichnet, dass** sein Glühverlust weniger als 1,5 % beträgt.

11. Glasfaden nach einem der Ansprüche 1 bis 10, **dadurch gekennzeichnet, dass** er aus Filamenten mit einem Durchmesser von 9 bis 16 $\mu$m gebildet ist.

12. Glasfaden nach einem der Ansprüche 1 bis 11, **dadurch gekennzeichnet, dass** sein Titer 15 bis 60 tex beträgt.

13. Schlichte Zusammensetzung, die zum Beschichten der Glasfäden nach einem der Ansprüche 1 bis 12 vorgesehen ist und:

- mindestens ein Polyurethan A,
- mindestens einen Polyester B,
- mindestens ein Gleitmittel,
- mindestens ein Haftmittel und
- Wasser

umfasst, **dadurch gekennzeichnet, dass** das Gewichtsverhältnis von A/B $0,05 \leq \frac{A}{B} < 3$ beträgt.

14. Zusammensetzung nach Anspruch 13, **dadurch gekennzeichnet, dass** sie:

- 0,5 bis 5 Gew.-% Polyurethan A,
- 1,5 bis 5,85 Gew.-% Polyester B,
- 0,02 bis 0,04 Gew.-% Gleitmittel,
- 0,10 bis 0,33 Gew.-% Haftmittel und
- mindestens 90 % Wasser

umfasst.

15. Zusammensetzung nach Anspruch 14, **dadurch gekennzeichnet, dass** sie:

- 2 bis 5 Gew.-% Polyurethan A und
- 3,65 bis 5,85 Gew.-% Polyester B

umfasst.

16. Zusammensetzung nach Anspruch 14, **dadurch gekennzeichnet, dass** sie:

- 0,65 bis 1,65 Gew.-% Polyurethan A und
- 1,60 bis 2,6 Gew.-% Polyester B

umfasst.

17. Zusammensetzung nach einem der Ansprüche 13 bis 16, **dadurch gekennzeichnet, dass** ihre Trockensubstanz 2 bis 10 Gew.-% ausmacht.

18. Zusammensetzung nach einem der Ansprüche 13 bis 17, **dadurch gekennzeichnet, dass** sie außerdem mindestens ein Antistatik- und/oder ein Vernetzungs- und/oder ein Antioxidationsmittel enthält.

19. Verbundplatte, die mindestens ein wärmeaushärtbares Polymer und verstärkende Glasfäden umfasst, **dadurch gekennzeichnet, dass** die Gesamtheit oder ein Teil dieser Fäden von Fäden nach einem der Ansprüche 1 bis 12 gebildet wird.

20. Verbundplatte nach Anspruch 19, **dadurch gekennzeichnet, dass** das Polymer aus Polyestern, Vinylestern, Acrylharzen, Phenolharzen und Epoxidharzen ausgewählt ist.

21. Verbundplatte nach Anspruch 19 oder 20, **dadurch gekennzeichnet, dass** ihre Zugfestigkeit mehr als 100 MPa beträgt.